# EUROPÄISCHE PATENTSCHRIFT

(11) **EP 3 207 505 B1**
(45) Veröffentlichungstag und Bekanntmachung des Hinweises auf die Patenterteilung: **21.12.2022**
(21) Anmeldenummer: 15727309.5
(22) Anmeldetag: 02.06.2015
(51) Int. Cl.: G06K 19/077

(54) **DATENTRÄGER MIT FLÄCHIGER LICHTQUELLE**
DATA CARRIER WITH FLAT LIGHT SOURCE
PORTEUR DE DONNEES AYANT UNE SOURCE LUMINEUSE PLATTE

(30) Priorität: 16.10.2014 DE 102014015275
(43) Veröffentlichungstag der Anmeldung: 23.08.2017
(73) Patentinhaber: Giesecke+Devrient Mobile Security GmbH, 81677 München (DE)
(72) Erfinder: KLUGE, Stefan, 80997 München (DE)
(74) Vertreter: Giesecke + Devrient IP
(86) Internationale Anmeldenummer: PCT/EP2015/001123
(87) Internationale Veröffentlichungsnummer: WO 2016/058649

(56) Entgegenhaltungen:
- DE-A1-102013 102 003

## Beschreibung

Die Erfindung beschreibt einen tragbaren Datenträger für eine kontaktlose Kommunikation mit einem Terminal, wobei der Datenträger eine flächige Lichtquelle aufweist.

DE 10 2013 102 003 A1 offenbart ein Chipkartenmodul, welches eine Leuchtvorrichtung auf einem Modulträger aufweist.

Aus dem Stand der Technik sind Leuchtdioden als punktuelle Lichtquellen für tragbare Datenträger, wie z.B. Chipkarten, Personalausweise, Kreditkarten, etc., bekannt. Um eine flächige Lichtquelle auf einem tragbaren Datenträger zu erhalten, ist ein großer technischer und finanzieller Aufwand für die notwendigen Lichtleiter und optischen Streuscheiben nötig.

Ausgehend vom Stand der Technik ist es Aufgabe der Erfindung eine Lösung zu finden, welche die beschriebenen Nachteile vermeidet.

Die Aufgabe der Erfindung wird durch den unabhängigen Anspruch gelöst. Vorteilhafte Ausführungen sind in den abhängigen Ansprüchen beschrieben.

Erfindungsgemäß ist in den Datenträgerkörper ein Lichtleiter angeordnet, um von der Lichtquelle emittiertes Licht in Bereiche des Datenträgers zu leiten, wo keine Lichtquelle angeordnet ist. Lichtleiter bieten sich speziell in Randbereichen des Datenträgers an, wo die Lichtquelle konstruktiv nicht mehr angeordnet werden kann, aber dennoch eine randlose Beleuchtung der gesamten Oberfläche des Datenträgers gewünscht wird.

Der Vorteil der Erfindung ist, dass es möglich ist eine flächige Lichtquelle mit einer über die Fläche verteilten gleichmäßigen Lichtemission auf einem tragbaren Datenträger, wie z.B. einer Chipkarte, Kreditkarte, Personalausweis, Führerschein, SIM-Karte, Krankenversicherungskarte, Sozialversicherungskarte etc., zur Verfügung zu stellen, die im Gegensatz zu den aus dem Stand der Technik bekannten punktuellen Lichtquellen in Form von z.B. Leuchtdioden, eine gleichmäßige flächige Lichtquelle darstellt, ohne den hohen Aufwand von z.B. Streuscheiben betreiben zu müssen, wie es im Stand der Technik bekannt ist, um eine flächige Lichtquelle auf einem tragbaren Datenträger zu erhalten. Die Lichtquelle und der erste Chip werden z.B. gemeinsam über die kontaktlose Schnittstelle, die vorzugsweise eine Antennenspule ist, mit Energie versorgt. Alternativ kann die Lichtquelle auch über eine eigene Antennenspule mit Energie versorgt werden. Die Lichtquelle kann entweder vom ersten Chip gesteuert leuchten oder sie kann unabhängig von einer Steuerung durch den ersten Chip leuchten, z.B. indem die Leuchtquelle leuchtet, sobald sie mit ausreichend Energie versorgt wird. Der Datenträger selbst besteht vorzugsweise aus laminierten Folienschichten, wobei generell jeder andere geeignete Aufbau des Datenträgers ebenfalls möglich ist.

Ein vorteilhaftes Ausführungsbeispiel ist, dass über der Lichtquelle eine Abdeckung angeordnet ist, die an mindestens einer Stelle mindestens einen Durchlass für das emittierte Licht der Lichtquelle aufweist.

Der Vorteil der Abdeckung ist, dass es möglich ist mittels der Durchlässe individuelle Symbole, Zeichen, Formen, Bilder, Schriften, Buchstaben, Zahlen, etc. auf der Oberfläche des Datenträgers darzustellen, indem die Abdeckung von hinten durch die Lichtquelle beleuchtet wird und ein Betrachter von vorne das emittierte Licht der Lichtquelle an den Durchlässen der Abdeckung erkennt und sich so z.B. eine Beschriftung oder ein Bild erkennen läßt. Die Abdeckung kann z.B. aus einer Metallisierung bestehen, in die z.B. mittels eines Lasers Durchlässe in Form einer individuellen Personalisierung, einer Beschriftung, eines Bilds, etc. eingebracht sind. Die Metallisierung kann sich über die gesamte Oberfläche des Datenträgers erstrecken. Somit sind ähnlich einem Einzelkartendruck individuell gestaltete Leuchtmotive auf dem Datenträger darstellbar, die insbesondere bei Beleuchtung durch die Lichtquelle aus dem Inneren der Karte heraus von außen sichtbar werden, wobei zumindest ein Teil des Leuchtmotivs bereits ohne Beleuchtung zu erkennen sein kann. Mit Beleuchtung wird das Leuchtmotiv bzw. ein zusätzliches Leuchtmotive deutlich sichtbar. Ferner kann die Helligkeit der Beleuchtung je nach Anwendungsfall so erhöht oder abgesenkt werden, dass ein Leuchtmotiv brillant und damit auffällig erscheint. Somit kann die Erfindung auch für Sicherheitsmerkmale auf hoheitlichen Dokumenten, wie z.B. Personalausweisen, Reisepässen, Führerscheinen, etc. verwendet werden.

Ein weiteres vorteilhaftes Ausführungsbeispiel ist, dass die Abdeckung eine Druckfarbe, ein Hologramm und/oder ein Kinegramm ist.

Mittels der Abdeckung kann der Durchlass, wo das emitierte Licht der Lichtquelle von außen sichtbar ist, eingegrenzt werden. Die Abdeckung selbst kann dabei in der Karte oder auf der Karte angeordnet sein. Ferner kann durch einen teilweise lichtdurchlässigen Druck auf einem Durchlass der Abdeckung eine Leuchtkraft stellenweise abgesenkt werden.

Ein weiteres vorteilhaftes Ausführungsbeispiel ist, dass die Lichtquelle eine organische Leuchtdiode oder eine elektrolumineszente Leuchtschicht ist. Vorteilhaft besteht die Lichtquelle aus einem druckbaren Material, was die Verarbeitung deutlich vereinfacht. Alternativ ist jede andere geeignete Lichtquelle möglich.

Ein weiteres vorteilhaftes Ausführungsbeispiel ist, dass die kontaktlose Schnittstelle eine Antennenspule ist.

Ein weiteres vorteilhaftes Ausführungsbeispiel ist, dass die Antennenspule lichtdurchlässig ist.

Der Vorteil einer lichtdurchlässigen Antennespule ist, dass die Antennenspule auch in einem von außen sichtbaren Bereich angeordnet werden kann, ohne dass die Antennenspule von außen zu erkennen ist.

Ein weiteres vorteilhaftes Ausführungsbeispiel ist, dass mindestens zwei Lichtleiter in einem Winkel zueinander angeordnet sind.

Die Lichtleiter können beispielsweise parallel zueinander oder in einem rechten oder spitzen oder jeden anderen geeigneten Winkel angeordnet sein.

Ein weiteres vorteilhaftes Ausführungsbeispiel ist, dass mindestens zwei Lichtleiter in einer gemeinsamen Ebene oder in unterschiedlichen Ebenen des Körpers des Datenträgers angeordnet sind.

Eine gemeinsame Ebene bietet sich an, wenn z.B. zwei Lichtleiter parallel zueinander verlaufen. Unterschiedliche Ebenen bieten sich an, wenn z.B. zwei Lichtleiter in einem Winkel zueinander angeordnet sind.

Ein weiteres vorteilhaftes Ausführungsbeispiel ist, dass mindestens ein Lichtleiter zumindest auf einem Teil seiner Oberfläche lichtdurchlässig ist.

Wenn ein Lichtleiter zumindest auf einem Teil seiner Oberfläche lichtdurchlässig ist, dann können mittels des Lichtleiters beliebige Muster von austretendem Licht auf der Oberfläche des Lichtleiters erzeugt werden, d.h. das Licht kann nur an einer ganz bestimmten Stelle aus dem Lichtleiter austreten.

Ein weiteres vorteilhaftes Ausführungsbeispiel ist, dass der Körper und/oder mindestens ein Lichtleiter mindestens einen Fluoreszenzfarbstoff und/oder einen optischen Streukörper enthalten/enthält.

Der Vorteil von Fluoreszenzfarbstoffen und optischen Streukörpern ist, dass optische Effekte erzielt werden, wenn diese Licht reflektieren. Die optischen Streukörper können z.B. weiß, matt, silbrig oder golden reflektierende Metall- oder Glimmerpartikel sein.

Ein weiteres vorteilhaftes Ausführungsbeispiel ist, dass der Körper an mindestens einer Außenseite eine zumindest teilweise strukturierte Oberfläche aufweist.

Der Vorteil der strukturierten Oberfläche ist, dass das emittierte Licht der Lichtquelle bevorzugt an der strukturierten Oberfläche austritt. Es können somit Bereiche vorgegeben bzw. erzeugt werden, wo bevorzugt Licht austritt. Die strukturierte Oberfläche kann z.B. mittels eines Laminierblechs, einer Fräsung oder einer Hochprägung hergestellt werden.

Ein weiteres vorteilhaftes Ausführungsbeispiel ist, dass ein zweiter Chip zur Steuerung der Lichtquelle auf dem Datenträger angeordnet ist.

Der Vorteil des zweiten Chips ist eine Entlastung des ersten Chips und die Möglichkeit besondere optische Effekte, z.B. ein Lauflicht, darzustellen.

Ein weiteres vorteilhaftes Ausführungsbeispiel ist, dass die Lichtquelle eingerichtet ist, um die Lichtfarbe zu verändern.

Eine Einrichtung zur Veränderung der Lichtfarbe kann zu ganz individuellen Lichteffekten führen und somit eine deutlich erhöhte Fälschungssicherheit bewirken.

Im Folgenden werden Ausführungsbeispiele der Erfindung anhand der beigefügten Figuren beschrieben.
Figur 1 zeigt einen Aufbau eines erfindungsgemäßen Datenträgers.
Figur 2 zeigt ein erstes Ausführungsbeispiel des erfindungsgemäßen Datenträgers.

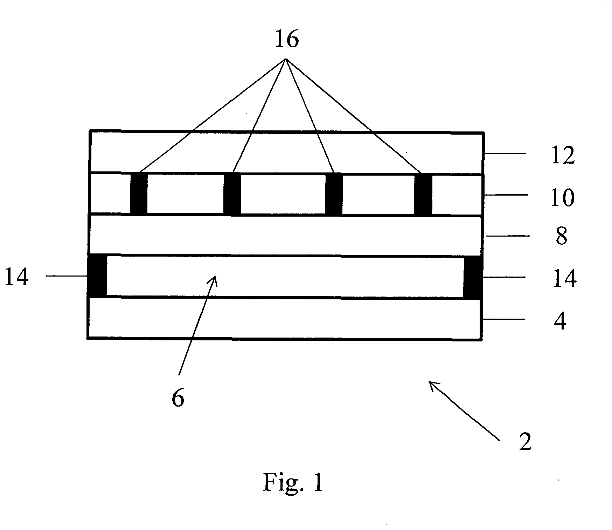

In Figur 1 wird ein struktureller Aufbau in Seitenansicht eines erfindungsgemäßen Datenträgers 2 gezeigt. Aus Gründen der Übersichtlichtkeit wurde hier auf die Darstellung des Chips, der Antennenspule und der elektrischen Verbindungen verzichtet. Der Datenträger 2 umfasst einen Träger 4. Der Träger 4 kann aus mehreren Folienschichten bestehen. Ferner kann der Träger 4 lichtdurchlässig oder lichtundurchlässig sein. Je nach Anwendungsfall ist der Träger 4 personalisierbar. Auf dem Träger 4 ist eine erfindungsgemäße flächige Lichtquelle 6 angeordnet. Die Lichtquelle 6 kann bedingt durch die Fertigung einen Rand 14 aufweisen. Auf der Lichtquelle 6 befindet sich optional eine lichtdurchlässige Schicht 8. Eine erfindungsgemäße optionale Abdeckung 10 ist auf der Schicht 8 angebracht. In der Abdeckung 10 sind Durchlässe 16 angeordnet, durch die das Licht von außen zu erkennen ist. Die Durchlässe 16 können die Form von z.B. Bildern, Figuren, Zahlen, Zeichen, Buchstaben, Symbolen, etc. annehmen. Die Abdeckung 10 kann z.B. eine aufgedampfte Metallisierung sein. Die Durchlässe 16 werden z.B. mittels eines Lasers in die Metallisierung eingebracht. Alternativ kann die Abdeckung 10 z.B. mittels eines Siebdruckverfahrens so gedruckt werden, dass die Durchlässe 16 durch das Druckverfahren hergestellt werden. Auf der Abdeckung 10 ist eine optionale Schutzschicht 12 angeordnet, die lichtdurchlässig ist.

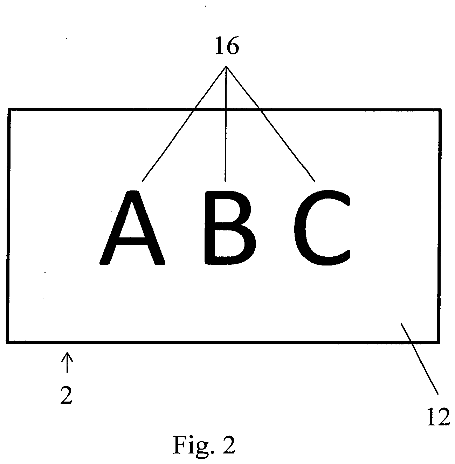

Figur 2 zeigt ein erstes Ausführungsbeispiel des erfindungsgemäßen Datenträgers 2 in Draufsicht auf die lichtdurchlässige Schutzschicht 12. Durch das von der Lichtquelle 6 emitierte Licht sind die Durchlässe 16 in Form der Buchstaben ABC von außen sichtbar.

### Bezugszeichenliste

- 2: erfindungsgemäßer Datenträger
- 4: Träger
- 6: flächige Lichtquelle
- 8: lichtdurchlässige Schicht, optional
- 10: Abdeckung
- 12: Schutzschicht, optional
- 14: Rand außerhalb der flächigen Lichtquelle
- 16: Durchlass in der Abdeckung

## Patentansprüche

1. Tragbarer Datenträger (2) umfassend
eine kontaktlose Schnittstelle, die zur Übertragung von Energie und Daten zwischen dem Datenträger (2) und einem externen Terminal dient,
einen ersten Chip, der zur Verarbeitung der Daten dient und der von der kontaktlosen Schnittstelle mit Energie und Daten versorgt wird,
wobei der Datenträger (2) einen Körper umfasst, der zumindest auf einer Fläche zumindest teilweise lichtdurchlässig ist,
wobei der Datenträger (2) eine Lichtquelle (6) aufweist, die sich zumindest über einen Teil der Fläche des Datenträgers (2) flächig erstreckt und über die flächige Erstreckung hinweg gleichmäßig oder ungleichmäßig Licht emittiert,
**dadurch gekennzeichnet, dass** im Körper des Datenträgers (2) mindestens ein Lichtleiter angeordnet ist, um von der Lichtquelle (6) emittiertes Licht in Bereiche des Datenträgers (2) zu leiten, wo keine Lichtquelle (6) angeordnet ist.

2. Datenträger (2) nach Anspruch 1, **dadurch gekennzeichnet, dass** über der Lichtquelle (6) eine Abdeckung (10) angeordnet ist, die an mindestens einer Stelle mindestens einen Durchlass (16) für das emittierte Licht der Lichtquelle (6) aufweist.

3. Datenträger (2) nach Anspruch 1 oder 2, **dadurch gekennzeichnet, dass** die Abdeckung (10) eine Druckfarbe, ein Hologramm und/oder ein Kinegramm ist.

4. Datenträger (2) nach einem der vorhergehenden Ansprüche 1 bis 3, **dadurch gekennzeichnet, dass** die Lichtquelle (6) eine organische Leuchtdiode oder eine elektrolumineszente Leuchtschicht ist.

5. Datenträger (2) nach einem der vorhergehenden Ansprüche 1 bis 4, **dadurch gekennzeichnet, dass** die kontaktlose Schnittstelle eine Antennenspule ist.

6. Datenträger (2) nach einem der vorhergehenden Ansprüche 1 bis 5, **dadurch gekennzeichnet, dass** die Antennenspule lichtdurchlässig ist.

7. Datenträger (2) nach einem der vorhergehenden Ansprüche 1 bis 6, **dadurch gekennzeichnet, dass** mindestens zwei Lichtleiter in einem Winkel zueinander angeordnet sind.

8. Datenträger (2) nach einem der vorhergehenden Ansprüche 1 bis 7, **dadurch gekennzeichnet, dass** mindestens zwei Lichtleiter in einer gemeinsamen Ebene oder in unterschiedlichen Ebenen des Körpers des Datenträgers (2) angeordnet sind.

9. Datenträger (2) nach einem der vorhergehenden Ansprüche 1 bis 8, **dadurch gekennzeichnet, dass** mindestens ein Lichtleiter zumindest auf einem Teil seiner Oberfläche lichtdurchlässig ist.

10. Datenträger (2) nach einem der vorhergehenden Ansprüche 1 bis 9, **dadurch gekennzeichnet, dass** der Körper und/oder mindestens ein Lichtleiter mindestens einen Fluoreszenzfarbstoff und/oder einen optischen Streukörper enthalten/enthält.

11. Datenträger (2) nach einem der vorhergehenden Ansprüche 1 bis 10, **dadurch gekennzeichnet, dass** der Körper an mindestens einer Außenseite eine zumindest teilweise strukturierte Oberfläche aufweist.

12. Datenträger (2) nach einem der vorhergehenden Ansprüche 1 bis 11, **dadurch gekennzeichnet, dass** ein zweiter Chip zur Steuerung der Lichtquelle (6) auf dem Datenträger (2) angeordnet ist.

13. Datenträger (2) nach einem der vorhergehenden Ansprüche 1 bis 12, **dadurch gekennzeichnet, dass** die Lichtquelle (6) eingerichtet ist, um die Lichtfarbe zu verändern.

## Claims

1. A portable data carrier (2) comprising
a contactless interface which serves for transmitting energy and data between the data carrier (2) and an external terminal,
a first chip which serves for processing the data and is supplied with energy and data by the contactless interface,
wherein the data carrier (2) comprises a body which is at least partly light-transmissive at least on one area,
wherein the data carrier (2) has a light source (6) which extends areally at least over a part of the area of the data carrier (2) and emits light uniformly or non-uniformly over the areal extension,
**characterized in that** in the body of the data carrier (2) there is disposed at least one light guide to direct light emitted by the light source (6) into regions of the data carrier (2) where no light source (6) is disposed.

2. The data carrier (2) according to claim 1, **characterized in that** above the light source (6) there is disposed a cover (10) which has at least one passage (16) for the emitted light of the light source (6) at at least one position.

3. The data carrier (2) according to claim 1 or 2, **characterized in that** the cover (10) is a printing ink, a hologram and/or a Kinegram.

4. The data carrier (2) according to any of the preceding claims 1 to 3, **characterized in that** the light source (6) is an organic light-emitting diode or an electroluminescent luminous layer.

5. The data carrier (2) according to any of the preceding claims 1 to 4, **characterized in that** the contactless interface is an antenna coil.

6. The data carrier (2) according to any of the preceding claims 1 to 5, **characterized in that** the antenna coil is light-transmissive.

7. The data carrier (2) according to any of the preceding claims 1 to 6, **characterized in that** at least two light guides are disposed at an angle to each other.

8. The data carrier (2) according to any of the preceding claims 1 to 7, **characterized in that** at least two light guides are disposed in a common plane or in different planes of the body of the data carrier (2).

9. The data carrier (2) according to any of the preceding claims 1 to 8, **characterized in that** at least one light guide is light-transmissive at least on a part of its surface.

10. The data carrier (2) according to any of the preceding claims 1 to 9, **characterized in that** the body and/or at least one light guide include/s at least one fluorescent dye and/or an optical diffuser.

11. The data carrier (2) according to any of the preceding claims 1 to 10, **characterized in that** the body has an at least partly structured surface on at least one outer side.

12. The data carrier (2) according to any of the preceding claims 1 to 11, **characterized in that** a second chip for controlling the light source (6) is disposed on the data carrier (2).

13. The data carrier (2) according to any of the preceding claims 1 to 12, **characterized in that** the light source (6) is arranged to change the light color.

## Revendications

1. Support de données portable (2) comprenant
une interface sans contact qui sert à la transmission d'énergie et de données entre le support de données (2) et un terminal externe,
une première puce qui sert au traitement des données et qui est alimentée en énergie et en données par l'interface sans contact,
cependant que le support de données (2) comprend un corps qui, au moins sur une surface, est au moins partiellement translucide,
cependant que le support de données (2) comporte une source de lumière (6) qui s 'étend en surface au moins sur une partie de la surface du support de données (2) et émet de la lumière de manière régulière ou irrégulière au-delà de l'étendue en surface,
**caractérisé en ce que,** dans le corps du support de données (2), au moins un conduit de lumière est agencé pour conduire dans des zones du support de données (2) où aucune source de lumière (6) n'est agencée de la lumière émise par la source de lumière (6).

2. Support de données (2) selon la revendication 1, **caractérisé en ce que,** au-dessus de la source de lumière (6), un recouvrement (10) est agencé, lequel comporte à au moins un endroit au moins un passage (16) pour la lumière émise de la source de lumière (6).

3. Support de données (2) selon la revendication 1 ou 2, **caractérisé en ce que** le recouvrement (10) est une encre d'impression, un hologramme et/ou un kinégramme.

4. Support de données (2) selon une des revendications précédentes de 1 à 3, **caractérisé en ce que** la source de lumière (6) est une diode lumineuse organique ou une couche lumineuse électroluminescente.

5. Support de données (2) selon une des revendications précédentes de 1 à 4, **caractérisé en ce que** l'interface sans contact est une bobine d'antenne.

6. Support de données (2) selon une des revendications précédentes de 1 à 5, **caractérisé en ce que** la bobine d'antenne est translucide.

7. Support de données (2) selon une des revendications précédentes de 1 à 6, **caractérisé en ce qu'**au moins deux conduits de lumière sont agencés en un angle l'un par rapport à l'autre.

8. Support de données (2) selon une des revendications précédentes de 1 à 7, **caractérisé en ce qu'**au moins deux conduits de lumière sont agencés en un plan commun ou en des plans différents du corps du support de données (2).

9. Support de données (2) selon une des revendications précédentes de 1 à 8, **caractérisé en ce qu'**au moins un conduit de lumière est translucide au moins sur une partie de sa surface.

10. Support de données (2) selon une des revendications précédentes de 1 à 9, **caractérisé en ce que** le corps et/ou au moins un conduit de lumière contiennent/contient au moins un colorant fluorescent et/ou un corps diffuseur optique.

11. Support de données (2) selon une des revendications précédentes de 1 à 10, **caractérisé en ce que** le corps comporte à au moins une face extérieure une surface au moins partiellement structurée.

12. Support de données (2) selon une des revendications précédentes de 1 à 11, **caractérisé en ce qu'**une deuxième puce est agencée sur le support de données (2) pour la commande de la source de lumière (6).

13. Support de données (2) selon une des revendications précédentes de 1 à 12, **caractérisé en ce que** la source de lumière (6) est équipée pour modifier la couleur de la lumière.
